# EUROPEAN PATENT APPLICATION

(11) **EP 4 159 478 A1**
(43) Date of publication of application: **05.04.2023**
(21) Application number: 22198265.5
(22) Date of filing: 28.09.2022
(51) Int. Cl.: B60C 1/00, C08L 9/06

(54) **RUBBER COMPOSITION AND TIRE**

(30) Priority: 30.09.2021 US 202163250327 P; 20.07.2022 US 202217813698
(71) Applicant: The Goodyear Tire & Rubber Company, Akron, OH 44316 (US)
(72) Inventor: MILAN, Marie-Laure Stéphanie, L-8043 Strassen (LU); DELVILLE, Jerome Joel Daniel, F54430 Rehon (FR); JACOBY, Claude Charles, L-6615 Wasserbillig (LU); KANZ, Carlo, L-8249 Mamer (LU); KAES, Christian Jean-Marie, L-9184 Schrondweiler (LU); AGUIAR DA SILVA, Cecilia, L-7264 Helmsange (LU)
(74) Representative: Kutsch, Bernd

(57) **Abstract**

A rubber composition and a tire comprising such a rubber composition is disclosed. The rubber composition comprises 70 phr to 100 phr of at least one styrene butadiene rubber; 0 phr to 30 phr of at least one further diene-based rubber; from 40 phr to 200 phr of at least one filler; at least 5 phr of aluminum hydroxide; and at least 0.5 phr of a rosin based resin.

## Description

### Field of the Invention

The present invention relates to a rubber composition. In particular, the rubber composition can be used in a tire, for instance in the tire tread.

### Background of the Invention

In the development of summer tires, in particular of high performance summer tires, it is a challenge to further improve the balance between grip, including dry and/or wet grip, and rolling resistance. At the same time the tire ship;d also desirably have sufficient robustness.

While improvements have been made in this area over the past decades, significant room for improving the balance of the above mentioned properties remains.

### Summary of the Invention

The invention relates to a rubber composition in accordance with claim 1 and to a tire in accordance with claim 14.

Dependent claims refer to preferred embodiments of the invention.

One object of the present invention is to provide a rubber composition having an improved balance of grip and limited hysteresis.

Another object of the invention is to provide a advanced rubber composition that has a sufficient tensile strength, good grip and limited hysteresis.

Yet another object of the invention is to provide a rubber composition allowing for advanced wet grip and dry grip, at limited hysteresis (or rolling resistance, respectively), optionally with a sufficient tensile strength.

Thus, in a first preferred aspect, the present invention is directed to a rubber composition comprising 70 phr to 100 phr of at least one styrene butadiene rubber, which is preferably solution polymerized, 0 phr to 30 phr of at least one further diene-based rubber, from 40 phr to 200 phr of at least one filler, at least 5 phr of aluminum hydroxide, and at least 0.5 phr of a rosin based resin.

It has been found that this combination of materials results in significantly increased grip. Also ride and handling properties in wet and in dry conditions have been improved. Rolling resistance or respective indicators, such as hysteresis, have been kept at a reasonable level. The same applies to the tensile strength of such a rubber composition.

In a preferred embodiment, the rubber composition comprises from 5 phr to 80 phr of aluminum hydroxide, preferably from 5 phr to 50 phr of aluminum hydroxide or even more preferably from 10 phr to 40 phr of aluminum hydroxide.

In a preferred embodiment, the rubber composition comprises from 0.5 phr to 15 phr, preferably from 0.5 to 10 phr, or more preferably from 1 phr to 9 phr, or even more preferably from 1 phr to 5 phr, of the rosin based resin. In particular, it has been found that even surprisingly small amounts of the rosin based resin can significantly support improved wet grip and/or wet handling performance. Using such small amounts of rosin is also positive from a costs perspective.

In a preferred embodiment, the rosin based resin or the rosin acid based resin is based on one or more of gum rosin and dimerized gum rosin.

In a preferred embodiment, the rosin based resin or the rosin acid based resin has a softening point within a range of 70°C to 160°C.

A softening point of a resin is determined herein according to ASTM E28, or equivalent, which might sometimes be referred to as a ring and ball softening point.

In a preferred embodiment, the rosin based resin or the rosin acid based resin has an acid number within a range of 130 to 180.

In a preferred embodiment, the rosin based resin is a gum rosin, which has optionally a softening point within a range of 65°C to 90°C, preferably from 70°C to 85°C, and preferably has an acid number within a range of 140 to 180.

In a preferred embodiment, the rosin based resin or the rosin acid based resin is a dimerized gum rosin, optionally having a softening point within a range of 130°C to 160°C, preferably from 140°C to 150°C, and preferably has an acid number within a range of 130 to 160 and even more preferably has an acid number which is within the range of 140 to 150.

In a preferred embodiment, the rosin based resin or the rosin acid based resin predominantly comprises abietic acid. In the case of it being dimerized, it predominantly comprises dimerized abietic acid.

In a preferred embodiment, the rosin based resin or the rosin acid based resin is predominantly based on abietic acid.

The term rosin based resin used above can be replaced by rosin or rosin resin.

In a preferred embodiment, the rubber composition comprises from 20 phr to 80 phr of a resin or traction resin, such as hydrocarbon resin.

In a preferred embodiment, the resin or the hydrocarbon resin is selected from one or more of DCPD resins, CPD resins, terpene resins, C5 resins, C9 resins, coumarone indene resin, styrene-alpha-methylstyrene or combinations of those. Optionally, these resins may be modified, in particular aromatically/C9 modified, and/or fully or partially hydrogenated.

In a preferred embodiment, the resin is selected from one or more of DCPD resins, CPD resins, C5 resins or combinations of those. Preferably the resin is a DCPD resin, and even more preferably a C9 modified DCPD resin. Such resins are optionally partially or fully hydrogenated.

In a preferred embodiment, the styrene butadiene rubber is a solution polymerized styrene butadiene rubber, and/or the diene-based rubber is one or more of synthetic polyisoprene and natural rubber.

In a preferred embodiment, the rubber composition comprises from 70 phr to 90 phr of the preferably solution polymerized styrene butadiene rubber and from 10 phr to 30 phr of natural rubber and/or synthetic polyisoprene. Such a rubber matrix has been found to be most preferable.

In a preferred embodiment, the styrene butadiene rubber or solution polymerized styrene butadiene rubber is functionalized for the coupling to silica. For instance, said rubber may comprise one or more functional groups selected from the list of one or more of an amino group, a thiol ester group, an alkoxy group, a hydroxyl group, and a silyl group.

In particular, said rubber may be functionalized (preferably end functionalized) with a group comprising at least one thiol group and at least one alkoxy group.

In a preferred embodiment, the filler predominantly comprises silica.

In a preferred embodiment, the filler comprises less than 10 phr of carbon black (preferably less than 5 phr) and at least 40 phr of silica.

In a preferred embodiment, the rubber composition comprises at least 105 phr (preferably at least 115 phr) of the silica and less than 10 phr (preferably less than 5 phr) of the carbon black.

In a preferred embodiment, the styrene butadiene rubber (which may be solution polymerized) has a glass transition temperature within a range of -51°C to - 86°C, preferably within a range of -61°C to -86°C.

In a preferred embodiment, the rubber composition comprises from 20 phr to 80 phr of a resin or hydrocarbon resin (such as those mentioned herein) having a glass transition temperature within a range of 35°C to 60°C. In particular, the combination of a polymer having a relatively low glass transition temperature with a resin with a relatively high glass transition temperature has been found to be desirable.

A glass transition temperature of a resin is determined herein as a peak midpoint by a differential scanning calorimeter (DSC) at a temperature rate of increase of 10ºC per minute, according to ASTM D6604 or equivalent.

In a preferred embodiment, the rubber composition comprises from 1 phr to 9 phr of a vegetable oil having a glass transition temperature within a range of -75°C to -100°C, preferably within a range of -75°C to -90°C.

In a preferred embodiment, the rubber composition comprises predominantly silica as a filler, wherein the composition further comprises a mercapto silane (preferably a blocked mercapto silane, such as 3-(octanoylthio)-1-propyltriethoxysilane)), preferably within a range of 1 phr to 20 phr, more preferably within a range of 10 phr to 20 phr.

In a preferred embodiment, the rubber composition further comprises an α,ω-bis(N,N'-dihydrocarbylthiocarbamamoyldithio)alkane, preferably within a range of 0.5 phr to 5 phr, or even more preferably within a range of 1 phr to 4 phr.

In a preferred embodiment, the α,ω-bis(N,N'-dihydrocarbylthiocarbamamoyldithio)alkane is selected from the group consisting of 1,2-bis(N,N'-dibenzylthiocarbamoyl-dithio)ethane; 1,3-bis(N,N'-dibenzylthiocarbamoyldithio)propane; 1,4-bis(N,N'-dibenzylth-iocarbamoyldithio)butane; 1,5-bis(N,N'-dibenzylthiocarbamoyl-dithio)pentane; 1,6-bis(N,N'-dibenzylthiocarbamoyldithio)hexane; 1,7-bis(N,N'-dibenzylth-iocarbamoyldithio)heptane; 1,8-bis(N,N'-dibenzylthiocarbamoyl-dithio)octane; 1,9-bis(N,N'-dibenzylthiocarbamoyldithio)nonane; and 1,10-bis(N,N'-dibenzylthiocarba-moyldithio)decane.Preferably, the α,ω-bis(N,N'-dihydrocarbylthiocarbama-moyldithio)alkane is 1,6-bis(N,N'-dibenzylthiocarbamoyldithio)hexane In particular, such a compound has been found by the inventors to be helpful for further improving wear properties of the rubber compound.

In a preferred embodiment, the aluminum hydroxide has one or more of i) a D50 particle diameter within a range of 0.2 µm to 5 µm, and ii) a BET surface area within a range of 1 m²/g to 20 m²/g. In particular, larger sized particles may be less desirable.

Aluminum hydroxide particle diameters are determined with a Zetasizer^{™} Nano S from Malvern using dynamic light scattering, based on ISO 22412 or equivalent. The BET surface area of aluminum hydroxide particles is determined in accordance with ISO 9277 or equivalent.

In a preferred embodiment, the silica has a BET surface area within a range of 150 m²/g and 220 m²/g.

In a preferred embodiment, the rubber composition includes at least one and/or one additional diene-based rubber. Representative synthetic polymers may be the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g. acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubber or elastomers may be in general natural rubber, synthetic polyisoprene, polybutadiene and SBR including SSBR.

In a preferred embodiment, a combination of two or more rubbers is used such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers, and emulsion polymerization prepared butadiene/acrylonitrile copolymers.

In a preferred embodiment an emulsion polymerization derived styrenebutadiene rubber (ESBR) might be used having a styrene content of 20 to 28 percent bound styrene or, for some applications, an ESBR having a medium to relatively high bound styrene content, namely a bound styrene content of 30 to 45 percent. In many cases the ESBR will have a bound styrene content which is within the range of 26 to 31 percent. By emulsion polymerization prepared ESBR, it may be meant that styrene and 1,3-butadiene are copolymerized as an aqueous emulsion. The bound styrene content can vary, for example, from 5 to 50 percent. In one aspect, the ESBR may also contain acrylonitrile to form a terpolymer rubber, as ESBAR, in amounts, for example, of 2 to 30 weight percent bound acrylonitrile in the terpolymer. Emulsion polymerization prepared styrene/butadiene/acrylonitrile copolymer rubbers containing 2 to 40 weight percent bound acrylonitrile in the copolymer may also be contemplated as diene-based rubbers.

In a preferred embodiment, solution polymerization prepared SBR (SSBR) may be used. Such an SSBR may for instance have a bound styrene content in a range of 5 to 50 percent, preferably 9 to 36 percent, and most preferably 26 to 31 percent. The SSBR can be conveniently prepared, for example, by anionic polymerization in an inert organic solvent. More specifically, the SSBR can be synthesized by copolymerizing styrene and a 1,3-butadiene monomer in a hydrocarbon solvent utilizing an organo lithium compound as the initiator. In still another embodiment, the solution styrene butadiene rubber is a tin-coupled polymer. In still another embodiment, the SSBR is functionalized for improved compatibility with silica. In addition, or alternatively, the SSBR is thio-functionalized. This helps to improve stiffness of the compound and/or its hysteresis behavior. Thus, for instance, the SSBR may be a thio-functionalized, tin-coupled solution polymerized copolymer of butadiene and styrene.

In a preferred embodiment, a synthetic or natural polyisoprene rubber is used. Synthetic cis-1,4-polyisoprene and natural rubber are as such well known to those having skill in the rubber art. The cis 1,4-microstructure content is preferably at least 90% and is typically at least 95% or even higher.

In a preferred embodiment, cis-1,4-polybutadiene rubber (BR or PBD) is used. Suitable polybutadiene rubbers may be prepared, for example, by organic solution polymerization of 1,3-butadiene. The BR may be conveniently characterized, for example, by having at least a 90 percent cis-1,4-microstructure content ("high cis" content) and a glass transition temperature (Tg) in a range of from -95°C to -110ºC. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646, which are incorporated herein by reference.

A glass transition temperature, or Tg, of an elastomer or elastomer composition, where referred to herein, represents the glass transition temperature(s) of the respective elastomer or elastomer composition in its uncured state or possibly a cured state in the case of an elastomer composition. Such a Tg is determined herein by the midpoint or inflection point of the step observed in association with the glass transition, as measured using a differential scanning calorimeter (DSC) at a temperature change rate of 10ºC per minute, according to ASTM D3418.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. In an example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. The terms "compound" and "composition" and "formulation" may be used herein interchangeably, unless indicated otherwise.

In a preferred embodiment, the rubber composition may also include one or more additional oils, in particular (additional) processing oils. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic (PCA) content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of (non-aminated and non-epoxidized) vegetable oils that can be used include soybean oil, sunflower oil, canola (rapeseed) oil, corn oil, coconut oil, cottonseed oil, olive oil, palm oil, peanut oil, and safflower oil.

In a preferred embodiment, the rubber composition includes silica. Commonly employed siliceous pigments which may be used in the rubber compound include for instance conventional pyrogenic and precipitated siliceous pigments (silica). In one embodiment, precipitated silica is used. The conventional siliceous pigments may be precipitated silicas such as, for example, those obtained by the acidification of a soluble silicate, e.g., sodium silicate. Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area is determined herein according to ASTM D5604 - 96 or equivalent. The conventional silica may also be characterized by having a dibutylphthalate (DBP) absorption value in a range of 100 cm³/100 g to 400 cm³/100 g, alternatively 150 cm³/100 g to 300 cm³/100 g which can be suitably determined according to ASTM D 2414 or equivalent. Various commercially available silicas may be used, such as, only for example herein, and without limitation, silicas commercially available from PPG Industries under the Hi-Sil trademark with designations 210, 315G, EZ160G, etc.; silicas available from Solvay, with, for example, designations ZeoSil 1165 MP and ZeoSil Premium 200 MP, etc.; and silicas available from Evonik AG with, for example, designations VN2 and Ultrasil 6000GR, 9100GR, etc.

In a preferred embodiment, the rubber composition comprises pre-silanized and precipitated silica which may for instance have a CTAB adsorption surface area of between 130 m²/g and 210 m²/g, optionally between 130 m²/g and 150 m²/g and/or between 190 m²/g and 210 m²/g, or even between 195 m²/g and 205 m²/g. The CTAB (cetyl trimethyl ammonium bromide) method for determination of the silica surface area (ASTM D6845) is known to a person skilled in the art.

In a preferred embodiment, surface-modified precipitated silica which is treated prior to its addition to the rubber composition with at least one silane or silazane is employed. Suitable surface modification agents include but are not limited to alkylsilanes, alkoxysilanes, organoalkoxysilyl polysulfides, organomercaptoalkoxysilanes, and hexamethyldisilazane.

Silica dispersing aids, which can optionally be used, can be present in an amount ranging from 0.1% to 25% by weight, based on the weight of the silica, with 0.5% to 20% by weight being suitable, and 1% to 15% by weight based on the weight of the silica also being suitable. Various pre-treated precipitated silicas are described in United States Patent 4,704,414, United States Patent 6,123,762 and United States Patent 6,573,324. The teachings of United States Patent 4,704,414, United States Patent 6,123,762 and United States Patent 6,573,324 are incorporated herein by reference.

Some examples of pre-treated silicas (i.e. silicas that have been pre-surface treated with a silane) which are suitable for use in the practice of this invention include Ciptane^{®} 255 LD and Ciptane^{®} LP (PPG Industries) silicas that have been pre-treated with a mercaptosilane, and Coupsil^{®} 8113 (Degussa) that is the product of the reaction between organosilane bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries. Some representative examples of preferred pre-silanized precipitated silicas include Agilon^{®} 400, Agilon^{®} 454 and Agilon^{®} 458 from PPG Industries.

A representative silica coupler (silica coupling agent) having a moiety reactive with hydroxyl groups on pre-silanized precipitated silica and on precipitated silica and another moiety interactive with said elastomers, may be comprised of, for example: (A) bis(3-trialkoxysilylalkyl) polysulfide containing an average in range of from 2 to 4, alternatively from 2 to 2.6 or from 3.2 to 3.8, sulfur atoms in its connecting bridge, or (B) an alkoxyorganomercaptosilane, or (C) their combination. A representative example of such bis(3-trialkoxysilylalkyl) polysulfide is comprised of bis(3-triethoxysilylpropyl) polysulfide. As indicated, for the pre-silanized precipitated silica, the silica coupler may be desirably an alkoxyorganomercaptosilane. For the non-pre-silanized precipitated silica, the silica coupler may be desirably comprised of the bis(3-triethoxysilylpropyl) polysulfide.

In a preferred embodiment, the rubber composition is exclusive of addition of silica coupler to the rubber composition (thereby exclusive of silica coupler).

In a preferred embodiment, the rubber composition may contain a combination of additional silica coupler added to the rubber composition, particularly a bis(3-triethoxysilylpropyl) polysulfide containing an average of from 2 to 4 connecting sulfur atoms in its polysulfidic bridge together with an additional precipitated silica (non-pre-silanized precipitated silica) added to said rubber composition, wherein the ratio of pre-silanized precipitated silica to said precipitated silica is desirably at least 8/1, alternately at least 10/1.

In a preferred embodiment, the rubber composition may include carbon black. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 to 145 g/kg and a DBP number ranging from 34 cm³/100 g to 150 cm³/100 g. Iodine absorption values can be suitably determined according to ASTM D1510 or equivalent. Commonly employed carbon blacks can be used as a conventional filler in an amount ranging from 1 to 100 phr herein. However, in a preferred embodiment the composition comprises at most 10 phr of carbon black, preferably at most 5 phr of carbon black, as preferred embodiments are directed to high silica compounds and the improvement of their properties.

Other fillers may be used in the rubber composition including particulate fillers including ultra high molecular weight polyethylene (UHMWPE), crosslinked particulate polymer gels including those disclosed in United States Patent 6,242,534, United States Patent 6,207,757, United States Patent 6,133,364, United States Patent 6,372,857, United States Patent 5,395,891, or United States Patent 6,127,488, and a plasticized starch composite filler including that disclosed in United States Patent 5,672,639. Syndiotactic polybutadiene may also be utilized. Such other fillers may be used in an amount ranging from 1 phr to 30 phr, however, preferably in an amount of less than 5 phr herein.

In a preferred embodiment, the rubber composition may contain a conventional sulfur containing organosilicon compounds or silanes. Examples of suitable sulfur containing organosilicon compounds are of the formula:

Z - Alk - Sn - Alk - Z I

in which Z is selected from the group consisting of 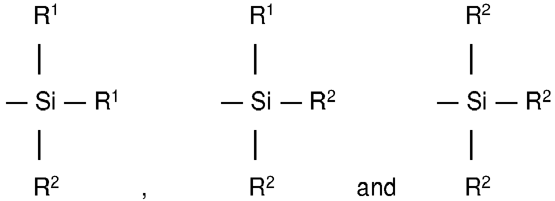 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 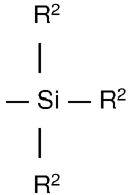 where R² is an alkoxy of 2 to 4 carbon atoms, alternatively 2 carbon atoms; Alk is a divalent hydrocarbon of 2 to 4 carbon atoms, alternatively of 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 20 phr.

In a preferred embodiment, the rubber composition comprises less than 0.1 phr cobalt salt or 0 phr cobalt salt.

It is readily understood by those having skill in the art that the rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants, antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively with a range of from 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, are employed at a level which is within the range of 1 phr to 5 phr. Often microcrystalline waxes are used. Typical amounts of peptizers, if used, are normally within the range of 0.1 phr to 1 phr. Typical peptizers may be, for example, pentachlorothiophenol and/or dibenzamidodiphenyl disulfide.

Accelerators may be preferably but not necessarily used to control the time and/or temperature required for vulcanization and to improve the properties of the vulcanizate. In one embodiment, a single accelerator system may be used, i.e. primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). In an embodiment, the rubber composition may be subjected to a thermomechanical mixing step. The thermomechanical mixing step generally comprises a mechanical working in a mixer or extruder for a period of time, for example suitable to produce a rubber temperature which is within the range of 140°C to 190°C. The appropriate duration of the thermomechanical working varies as a function of the operating conditions, and the volume and nature of the components. For example, the thermomechanical working may be from 1 to 20 minutes.

In a preferred embodiment, the tire is provided having a tread comprising the rubber composition in accordance with the invention.

In a preferred embodiment, the tire has a tread with one or more tread cap layers, wherein the rubber composition is in one or more of the two radially outermost tread cap layers, preferably in the radially outermost tread cap layer.

In a preferred embodiment, the rubber composition in accordance with the invention is used in a tread cap layer radially inside of the radially outermost tread cap layer. The rubber composition is preferably not in the radially outermost tread cap layer.In such an embodiment, a radially outermost tread cap layer does not comprise the rubber composition according to the invention. In contrast, the rubber composition of a tread cap layer radially below the radially outermost tread cap layer comprises the rubber composition according to the invention (or one or more of its embodiments). Such an arrangement or configuration can help to maintain the grip level, in particular wet grip at a similar level when the first tread cap layer is worn and radial rib or block heights of the tread have decreased. Then the loss of tread height can be at least partially compensated by the advanced grip of the rubber composition according to the present invention.

The rubber composition may also be used in a power transmission belt, a hose, a track, an air sleeve and a conveyor belt.

In a preferred embodiment, the rubber composition in accordance with the invention is used in a tire component selected from a tread, a shearband, rubber spokes, an undertread, a sidewall, an apex, a flipper, a chipper, a chafer, a carcass, a belt.

Vulcanization of the tire, preferably a pneumatic tire, of the present invention may be carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. However, it is generally preferred for the tires of this invention to be cured at a temperature ranging from 132ºC to 166º C. It is more typical for the tires of this invention to be cured at a temperature ranging from 143ºC to 154ºC. Such tires can be built, shaped, molded and cured by various methods which are known and are readily apparent to those having skill in such art.

### Brief Description of the Drawings

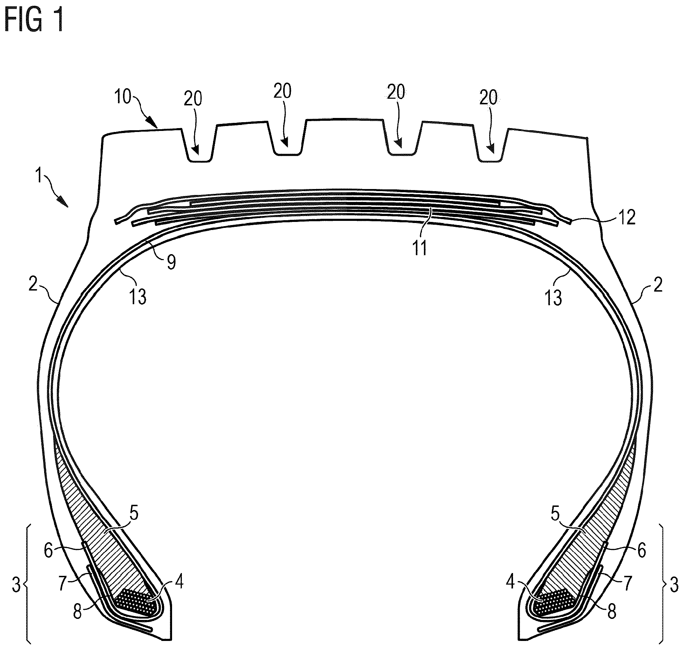

The structure, operation, and advantages of the invention will become more apparent upon contemplation of the following description taken in conjunction with the accompanying drawings, wherein Figure 1 is a schematic cross section of a tire comprising a rubber component with the rubber composition in accordance with an embodiment of the present invention.

### Detailed Description of Preferred Embodiments of the Invention

Figure 1 is a schematic cross-section of a tire 1 according to an embodiment of the invention. The tire 1 has a plurality of tire components such as a tread 10, an innerliner 13, a belt comprising four belt plies 11, a carcass ply 9, two sidewalls 2, and two bead regions 3, bead filler apexes 5 and beads 4. The example tire 1 is suitable, for example, for mounting on a rim of a vehicle, e.g. a truck or a passenger car. As shown in Figure 1, the belt plies 11 may be covered by an overlay ply 12 and/or may include one or more breaker plies. The carcass ply 9 includes a pair of axially opposite end portions 6, each of which is associated with a respective one of the beads 4. Each axial end portion 6 of the carcass ply 9 may be turned up and around the respective bead 4 to a position to anchor each axial end portion 6. The turned-up portions 6 of the carcass ply 9 may engage the axial outer surfaces of two flippers 8 and axial inner surfaces of two chippers 7 which are also considered as tire components. As shown in Figure 1, the example tread 10 may have circumferential grooves 20, each groove 20 essentially defining a U-shaped opening in the tread 10. The main portion of the tread 10 may be formed of one or more tread compounds. Moreover, the grooves 20, in particular the bottoms and/or sidewalls of the grooves 20 could be reinforced by a rubber compound having a higher hardness and/or stiffness than the remaining tread compound. Such a reinforcement may be referred to herein as a groove reinforcement.

While the embodiment of Figure 1 suggests a plurality of tire components including for instance apexes 5, chippers 7, flippers 8 and overlay 12, such and further components are not mandatory for the invention. Also, the turned-up end of the carcass ply 9 is not necessary for the invention or may pass on the opposite side of the bead area 3 and end on the axially inner side of the bead 4 instead of the axially outer side of the bead 4. The tire could also have for instance a different number of grooves 20, e.g. less than four grooves.

The rubber composition in accordance with a preferred embodiment of the invention is used in a tread or tread layer contacting the ground or road. In an embodiment, the tread 10 of the tire 1 or of another tire comprises a rubber composition according to the Inventive Example as identified in Table 1 below. The Comparative Examples 1 to 4 of Table 1 comprise different amounts of aluminum hydroxide but have all the same rubber matrix The Inventive Example has a moderate amount of aluminum hydroxide and in addition a rosin based resin.

**Table 1**

| **Materials** | **phr** | | | | |
|---|---|---|---|---|---|
| | Comparative Example 1 | Comparative Example 2 | Comparative Example 3 | Comparative Example 4 | Inventive Example |
| SBR¹ | 80 | 80 | 80 | 80 | 80 |
| NR² | 20 | 20 | 20 | 20 | 20 |
| Silica³ | 135 | 135 | 135 | 135 | 135 |
| Resin⁴ | 57 | 57 | 57 | 57 | 57 |
| Rosin based resin5 | 0 | 0 | 0 | 0 | 2 |
| Aluminum hydroxide⁶ | 0 | 15 | 20 | 25 | 20 |
| Vegetable Oil⁷ | 4 | 4 | 4 | 4 | 4 |
| Silane 1⁸ | 13.5 | 13.5 | 13.5 | 13.5 | 13.5 |
| Fatty Acid Ester | 2 | 2 | 2 | 2 | 2 |
| BDBzTH⁹ | 2.2 | 2.2 | 2.2 | 2.2 | 2.2 |
| Antidegradants¹⁰ | 4.1 | 4.1 | 4.1 | 4.1 | 4.1 |
| Sulfur | 1 | 1 | 1 | 1 | 1 |
| Waxes | 2.3 | 2.3 | 2.3 | 2.3 | 2.3 |
| Zinc Oxide | 1.1 | 1.1 | 1.1 | 1.1 | 1.1 |
| Silane 2¹¹ | 1 | 1 | 1 | 1 | 1 |
| Accelerator 1¹² | 3 | 3 | 3 | 3 | 3 |
| Accelerator 2¹³ | 1.3 | 1.3 | 1.3 | 1.3 | 1.3 |

| | | | | | |
|---|---|---|---|---|---|
| ¹ as Sprintan^{™} SLR 3402 from the company Trinseo, having a Tg of -62°C and a thiol-alkoxysilane functionalization ² natural rubber ³ as Zeosil^{™} 1165 MP having a BET surface area of 160 g/m² ⁴ as Oppera^{™} 383 from Exxon Mobil ⁵ gum rosin ⁶ Al(OH)₃ having a BET surface area of 6 m²/g, d50 of 1.0 µm, d90 of 2.4 µm, and d10 of 0.5 µm, and a density of 2.4 g/cm³ ⁷ sunflower oil having a Tg of about -80°C ⁸ as NXT^{™} from Momentive ⁹ 1,6-bis(N,N-dibenzylthiocarbamoyldithio)hexane with 10% oil and carbon black by weight ¹⁰ including dihydroquinolines and phenylenediamines ¹¹ 50% bis-triethoxysilylpropyl tetrasulfide and 50% carbon black as X50S from Evonik ¹² diphenylguanidine ¹³ N-Tert-Butyl-2-benzothiazolesulfenamide | | | | | |

Table 2 shows test data obtained with the Comparative Examples and the Inventive Example listed above in Table 1. As apparent from the below results, wet grip is significantly improved for the Inventive Example by a relatively small quantity of added rosin resin. Wet handling is also significantly improved compared to Comparative Example 1 (without aluminum hydroxide) but also compared to Comparative Example 2 comprising the same amount of aluminum hydroxide as the Inventive Example. Dry handling is surprisingly also significantly improved over Comparative Examples 1 and 3. Dry breaking remains essentially flat. The tensile strength is kept on a good level, despite the addition of aluminum hydroxide. Overall, the non-limiting Inventive Example provides an advanced balance of properties.

**Table 2**

| **Property** | Comparative Example 1 | Comparative Example 2 | Comparative Example 3 | Comparative Example 4 | Inventive Example |
|---|---|---|---|---|---|
| Wet grip ^{a} | 100 | 104 | 105 | 107 | 115 |
| Wet handling ^{b} | 100 | - | 102 | - | 105 |
| Dry handling ^{c} | 100 | - | 96 | - | 103 |
| Dry braking ^{d} | 100 | - | 100 | - | 100 |
| Tensile strength ^{e} | 19 | 18 | 18 | 17 | 18 |

| | | | | | |
|---|---|---|---|---|---|
| ^{a} Laboratory tests, results normalized to Comparative Example 1, based on determination of a transmittable friction force on a linear friction tester ^{b} Tire tests, results normalized to Comparative Example 1 ^{c} Tire tests, results normalized to Comparative Example 1 ^{d} Tire tests, results normalized to Comparative Example 1 ^{e} Laboratory test, wherein tensile strength is stress at break, using a ring sample according to ASTM D412 | | | | | |

## Claims

1. A rubber composition comprising:
70 phr to 100 phr of at least one styrene butadiene rubber;
0 phr to 30 phr of at least one further diene-based rubber;
from 40 phr to 200 phr of at least one filler;
at least 5 phr of aluminum hydroxide; and
at least 0.5 phr of a rosin or rosin acid based resin.

2. The rubber composition according to claim 1 wherein the rubber composition comprises from 5 phr to 80 phr of the aluminum hydroxide and/or wherein the rubber composition comprises from 0.5 phr to 15 phr of the rosin based resin.

3. The rubber composition according to claim 1 or 2 wherein the rosin or rosin acid based resin is based on one or more of gum rosin and dimerized gum rosin.

4. The rubber composition according to at least one of the previous claims wherein the rubber composition comprises from 20 phr to 80 phr of a resin, wherein the resin is preferably selected from at least one member of the group consisting of DCPD resins, CPD resins, terpene resins, C5 resins, C9 resins, coumarone indene resins, styrene-alphamethylstyrene resins or combinations of those.

5. The rubber composition according to at least one of the previous claims wherein the styrene butadiene rubber is a solution polymerized styrene butadiene rubber and wherein the diene-based rubber is one or more of synthetic polyisoprene and natural rubber.

6. The rubber composition according to at least one of the previous claims wherein the rubber composition comprises from 70 phr to 90 phr of the styrene butadiene rubber or of the solution polymerized styrene butadiene rubber, and from 10 phr to 30 phr of the further diene-based rubber or of the natural rubber or the synthetic polyisoprene.

7. The rubber composition according to at least one of the previous claims wherein the styrene butadiene rubber is functionalized for the coupling to silica; and/or wherein the filler comprises or predominantly comprises silica, said silica preferably having a BET surface area within a range of from 150 m²/g to 220 m²/g.

8. The rubber composition according to at least one of the previous claims wherein the filler comprises less than 10 phr of carbon black and at least 40 phr of silica; and/or wherein the rubber composition comprises at least 105 phr of silica and less than 10 phr of carbon black.

9. The rubber composition according to at least one of the previous claims wherein the styrene butadiene rubber has a glass transition temperature which is within the range of from -51°C to -86°C.

10. The rubber composition according to at least one of the previous claims wherein the rubber composition comprises from 20 phr to 80 phr of a resin having a glass transition temperature which is within the range of from 35°C to 60°C.

11. The rubber composition according to at least one of the previous claims wherein the rubber composition comprises from 1 phr to 9 phr of a vegetable oil having a glass transition temperature which is within the range of from -75°C to - 100°C.

12. The rubber composition according to at least one of the previous claims wherein the rubber composition comprises predominantly silica as a filler and wherein the composition further comprises a mercapto silane, preferably within a range of from 10 phr to 20 phr.

13. The rubber composition according to at least one of the previous claims wherein the aluminum hydroxide has one or more of: (i) a D50 particle diameter within a range of from 0.2 µm to 5 µm; (ii) a BET surface area within a range of 1 m²/g to 20 m²/g.

14. A tire comprising the rubber composition according to at least one of the previous claims.

15. The tire of claim 14 comprising a tread with a radially outermost tread cap layer comprising said rubber composition.
